Europäisches Patentamt

European Patent Office

Office européen des brevets

(11) Numéro de publication : **0 390 660 B1**

# FASCICULE DE BREVET EUROPEEN

(45) Date de publication du fascicule du brevet :
**18.01.95 Bulletin 95/03**

(51) Int. Cl.$^6$ : **H04N 7/01**

(21) Numéro de dépôt : **90400809.1**

(22) Date de dépôt : **23.03.90**

(54) **Procédé et dispositif d'interpolation temporelle d'images, à compensation de mouvement corrigée.**

(30) Priorité : **31.03.89 FR 8904256**

(43) Date de publication de la demande :
**03.10.90 Bulletin 90/40**

(45) Mention de la délivrance du brevet :
**18.01.95 Bulletin 95/03**

(84) Etats contractants désignés :
**AT CH DE ES GB LI NL SE**

(56) Documents cités :
**EP-A- 0 187 641**
**EP-A- 0 294 282**
**EP-A- 0 341 769**
**GB-A- 2 172 171**
**US-A- 4 383 272**
**US-A- 4 668 986**
**ICC'84, LINKS FOR THE FUTURE - IEEE PRO-
CEEDINGS OF THE IEEE INTERNATIONAL
CONFERENCE ON COMMUNICATIONS, Amsterdam, 14-17 mai 1984, vol. 2, pages 707-710,
IEEE, New York, US; A. FURUKAWA et al.:
"Motion-adaptive interpolation for videoconference pictures"
COMPUTER VISION, GRAPHICS AND IMAGE
PROCESSING, vol. 21, no. 2, février 1983,
pages 262-279, Academic Press, Inc., New
York, US; M. YACHIDA: "Determining velocity
maps by spatio-temporal neighborhoods from
image sequences"**

(56) Documents cités :
**SIGNAL PROCESSING, vol. 11, no. 4, décembre 1986, pages 387-404, Elsevier Science
Publishers B.V., Amsterdam, NL; M. BIERLING
et al.: "Motion compensating field interpolation using a hierarchically structured displacement estimator"
ICC' 86 - IEEE INTERNATIONAL CONFE-
RENCE ON COMMUNICATIONS, CONFE-
RENCE RECORD, Toronto, 22-25 juin 1986, vol.
2, pages 1280-1284, IEEE, New York, US; Y.
NINOMIYA et al.: "A motion vector detector
for MUSE encoder"**

(73) Titulaire : **THOMSON CONSUMER
ELECTRONICS
9, Place des Vosges
La Défense 5
F-92400 Courbevoie (FR)**

(72) Inventeur : **Robert, Philippe
THOMSON-CSF,
SCPI,
Cédex 67
F-92045 Paris la Défense (FR)**
Inventeur : **Basset, Pascal
THOMSON-CSF,
SCPI,
Cédex 67
F-92045 Paris la Défense (FR)**

(74) Mandataire : **Ruellan-Lemonnier, Brigitte et al
THOMSON-CSF,
SCPI,
B.P. 329,
50, rue Jean-Pierre Timbaud
F-92402 Courbevoie Cédex (FR)**

## Description

L'invention se rapporte au traitement d'images, et plus particulièrement à l'interpolation temporelle d'images à partir d'images mères, utilisant la compensation de mouvement.

L'interpolation d'une séquence d'image à partir d'une autre séquence consiste à générer une image de la séquence finale à partir d'images de la séquence d'entrée par interpolation spatio-temporelle. Cette interpolation a pour but de déterminer les caractéristiques (valeur de luminance et éventuellement valeurs de chrominance) de chaque pixel de l'image à générer, à partir des caractéristiques (valeurs de luminance et éventuellement de chrominance) de pixels correspondants dans les images d'entrée l'encadrant. Dans la suite on utilisera indifféremment les termes trame ou image, et seuls les cas où les trames d'entrée et de sortie sont décrites par le même nombre de lignes et de points par ligne seront considérés. Les autres cas peuvent être traités de la même façon en y ajoutant un filtrage spatial adapté qui ne sera pas décrit ici.

Les applications de l'interpolation d'image sont nombreuses. Elle est employée notamment en conversion de standard, pour la conversion de séquences d'images de télévision d'un standard 50Hz vers un standard à 60Hz ou inversement ; elle peut également être employée en codage, pour la restitution de séquences, lorsqu'un sous-échantillonnage de trame a été effectué dans le codeur. Elle permet, également, plus généralement d'augmenter la fréquence d'image dans une séquence, par exemple pour améliorer le confort visuel.

Pour l'interpolation d'images, une première technique consiste à interpoler à l'aide d'un filtre spatio-temporel linéaire, ce filtre étant fixe pour tous les points de la trame et n'étant fonction que des durées séparant les trames d'entrée des trames à générer. Il est connu que ces méthodes sont bien adaptées à des zones de l'image temporellement fixes ou à faible mouvement, mais présentent d'importants défauts, en particulier sur les zones à fort mouvement. Ces défauts proviennent de la difficulté à trouver un compromis correct entre la limitation de la bande passante temporelle (qui crée du flou), et le repliement des composantes spectrales indésirables (qui crée un battement temporel).

Pour éviter ces défauts, le filtre interpolateur doit être adapté au spectre du signal d'entrée et c'est ce qui est réalisé par une interpolation dite à compensation de mouvement. Cette technique consiste à interpoler les pixels dans la direction de vecteurs de mouvement qui leur sont associés. Pour cela l'étape d'interpolation est précédée d'une opération d'estimation de mouvement, qui consiste à attribuer à chaque pixel à interpoler un vecteur de mouvement, qui fournit en fait l'adresse du même pixel dans les trames d'entrée qui encadrent la trame à interpoler. Cette technique exige bien évidemment de résoudre le problème de l'analyse du mouvement de façon satisfaisante, et notamment, pour obtenir une bonne qualité d'image, de définir le champ de mouvement de façon précise, un vecteur de mouvement étant estimé pour chaque pixel et avec une précision en deçà du pixel. On connaît des estimateurs de mouvement adaptés, capables de fournir de façon fiable un champ de vecteurs de mouvement précis. Un tel estimateur de mouvement est par exemple décrit dans la demande de brevet français n° 88 12468, correspondant au document EP-A-0 360 698 publié le 28/03/90, intitulée "Procédé et dispositif d'estimation de mouvement dans une séquence d'images animées".

Dans le cadre de l'interpolation d'image, deux types d'estimateurs de mouvement peuvent être distingués selon que le mouvement est estimé pour les pixels de la trame à interpoler, ou que le mouvement est estimé pour les pixels de l'une des trames mères. Dans ce dernier cas il est nécessaire de faire suivre cette estimation d'une étape de définition du champ de mouvement des trames à interpoler. Une méthode d'interpolation utilisant une technique de ce type est décrite dans la demande de brevet français n° 87 07814, correspondant au document FR-A-2 616 248, intitulée "Procédé d'interpolation temporelle d'image et dispositif pour la mise en oeuvre de ce procédé". Cette méthode est notamment utilisable lorsque plusieurs trames intermédiaires doivent être interpolées à partir de deux trames mères : une seule estimation de mouvement est alors réalisée entre ces deux trames mères, puis le champ de mouvement de chaque trame à interpoler est déterminé à partir de ce champ estimé. Par la suite on considérera le cas où le champ de mouvement a été obtenu pour la trame à interpoler, quelle que soit la méthode employée pour aboutir à ce résultat.

L'interpolation elle-même tient donc compte des changements temporels. En effet les séquences d'entrée et de sortie de l'interpolateur sont deux représentations d'une même scène, continue et généralement dynamique, à des suites d'instants différents. Le contenu de la séquence est d'ordre spatial et temporel et le transfert de l'information d'une séquence à l'autre prend nécessairement en compte ces changements temporels. Ainsi, pour l'interpolation avec compensation de mouvement, le pixel (élément d'image) n'est plus considéré comme un simple élément d'image mais plutôt comme un élément d'objet, cet élément d'objet pouvant évoluer dans l'image au cours du temps, apparaître, se déplacer, changer de luminance, et/ou disparaître. Il est évidemment essentiel de s'adapter au mouvement des pixels, ce mouvement étant une cause très fréquente de changement au cours du temps ; sa prise en compte permet de traiter efficacement la plupart des situations possibles dans une scène. Cependant il est aisé d'imaginer des situations où l'analyse du mouvement est erronée parce que le mouvement en tant que modèle de changement temporel n'est pas approprié, par exemple lorsque des objets apparaissent ou disparaissent d'une image d'entrée à la suivante.

De fait, pour tenir compte de toutes les situations possibles, il faudrait considérer, en plus du déplacement des objets, d'autres causes de variation temporelle de la luminance au cours du temps telles que la variation intrinsèque de luminance des éléments d'objets (sans considération de mouvement), l'apparition ou la disparition possible de pixels en tant qu'éléments d'objets. Par analogie avec ce qui vient d'être dit, la méthode la plus simple d'interpolation qui est l'interpolation linéaire fait l'hypothèse que les éléments d'objet sont fixes et considère que la variation de luminance des pixels au cours du temps est uniquement due à une variation de luminance des éléments d'objet, sans déplacement de ces éléments.

Dans un dispositif d'interpolation temporelle d'image avec compensation de mouvement, des défauts peuvent apparaître dans l'interpolation lorsque le mouvement en tant que modèle de changement temporel n'est pas approprié ainsi que dans le cas de scènes dynamiques complexes, par exemple quand deux objets fins se croisent, ou lorsque le mouvement d'un objet provoque la disparition d'un second objet d'une image à la suite, ou encore lorsqu'un mouvement est combiné à une variation de luminance.

L'identification exacte de tels changements dans le temps nécessiterait un traitement sophistiqué sans commune mesure avec l'estimation de mouvement nécessaire à l'interpolation, sans commune mesure avec la fréquence d'occurrence de ce type de situation, et sans commune mesure avec la sensibilité à l'oeil de ce type d'événements. Cependant, il est impossible d'utiliser telle quelle l'information fournie par l'estimateur de mouvement car celle-ci est beaucoup trop bruitée et génère des défauts extrêmement gênants.

Pour remédier à cet inconvénient, l'article tiré de ICC'84 Links for the future IEEE proceeding Vol.2, pages 707-710 intitulé "Motion adaptive Interpolation for video conferences pictures" décrit un procédé d'interpolation temporelle à compensation de mouvement corrigée pour permettre l'interpolation de ces zones critiques. Pour cela, le procédé consiste à homogénéiser le champ de vecteurs mouvement détecté pour obtenir les vecteurs mouvement "réels" à partir d'hypothèses relatives à la forme de l'objet et au mouvement avec une méthode dite Motion adaptive Interpolation.

La présente invention a pour objet une nouvelle solution pour résoudre le problème des défauts apparaissant dans les images interpolées lorsque des vecteurs de mouvement erronés ont été détectés.

Selon l'invention, un procédé d'interpolation temporelle d'images, à compensation de mouvement corrigée, comportant une phase d'estimation du champ de vecteurs de mouvement d'une image à interpoler à partir d'images mères l'encadrant, les caractéristiques du point courant étant déterminées à partir des caractéristiques des points associés des images mères déterminées par le vecteur mouvement affecté à ce point courant, une phase d'analyse de cohérence du champ de vecteurs mouvement de l'image à interpoler, l'interpolation à compensation de mouvement étant corrigée pour les points de l'image à interpoler pour lesquels des incohérences ont été détectées dans le champ de vecteurs mouvement, est caractérisé en ce que, en parallèle avec l'interpolation à compensation de mouvement du point courant de l'image à interpoler à partir du vecteur mouvement associé à ce point, une interpolation linéaire entre points de mêmes coordonnées que le point courant dans les images mères est calculée, les caractéristiques du point courant de l'image à interpoler étant déterminées à partir des caractéristiques résultant de ces deux interpolations en fonction des défauts détectés dans le champ de vecteurs-mouvement.

L'invention a également pour objet le dispositif destiné à la mise en oeuvre de ce procédé.

L'invention sera mieux comprise et d'autres caractéristiques apparaîtront à l'aide de la description qui suit en référence aux figures annexées :

- la figure 1 illustre l'interpolation d'une séquence d'images de sortie à partir d'une séquence d'images d'entrée ;
- la figure 2 illustre la correspondance entre deux points de deux images mères et un point correspondant de l'image interpolée ;
- la figure 3 est un schéma illustrant l'apparition et la disparition de pixels dans une scène ;
- la figure 4 illustre l'étape de filtrage du marquage des vecteurs de mouvement défectueux ;
- la figure 5 illustre la phase d'érosion du marquage des points à mouvement erroné ;
- la figure 6 illustre la phase de remplissage des points marqués à mouvement défectueux ;
- la figure 7 est un schéma synoptique du dispositif d'interpolation à mouvement compensé selon l'invention dans un premier mode de réalisation ;
- La figure 8 est le schéma synoptique du dispositif d'interpolation à mouvement compensé selon l'invention dans un deuxième mode de réalisation.

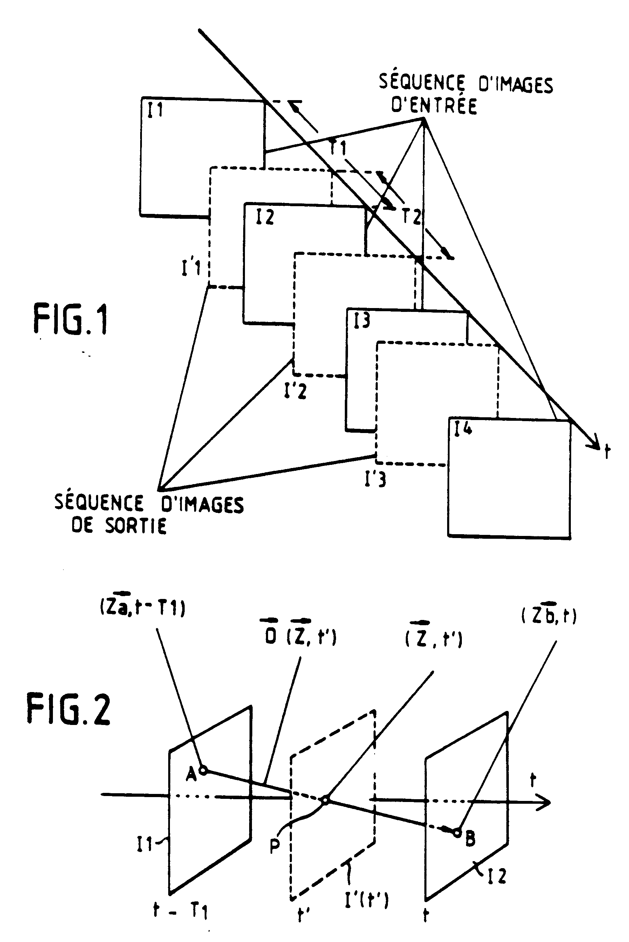

La figure 1 illustre l'interpolation à partir d'une séquence d'images d'entrée I1, I2, I3, I4 à 50Hz (espacées de T1 = 20ms), d'une séquence d'images de sortie I'1, I'2, I'3, I'4 à 60Hz (espacées de T2 = 16,6ms) en vue d'une conversion de standard.

D'une manière générale, une image interpolée peut être constituée à partir de plus de deux images d'entrée, mais comme illustré par la figure 2, les procédés utilisant l'interpolation à compensation de mouvement permettent d'obtenir une image intermédiaire I' à partir de deux images d'entrée I1 et I2, en utilisant le champ de mouvement des points de l'image à interpoler. Soit $\vec{D}$ (Z, t') le vecteur de mouvement du point P(Z) = P(X,Y) de l'image à interpoler, pour l'instant t' compris entre t-T1 et t, issu du traitement des images I1 et I2 de la séquence d'entrée. Le vecteur de mouvement détermine les points correspondants, A dans I1 et B dans I2 et fournit donc les adresses du pixel considéré comme un élément d'objet, respectivement dans les images mères I1 et I2, le déplacement étant supposé linéaire entre ces deux images. Le vecteur mouvement $\vec{D}$ a deux composantes Dx et Dy dans le plan image (X, Y).

Comme indiqué ci-dessus des défauts peuvent apparaître dans l'interpolation à compensation de mouvement notamment lorsque le mouvement en tant que modèle de changement dans le temps n'est plus approprié.

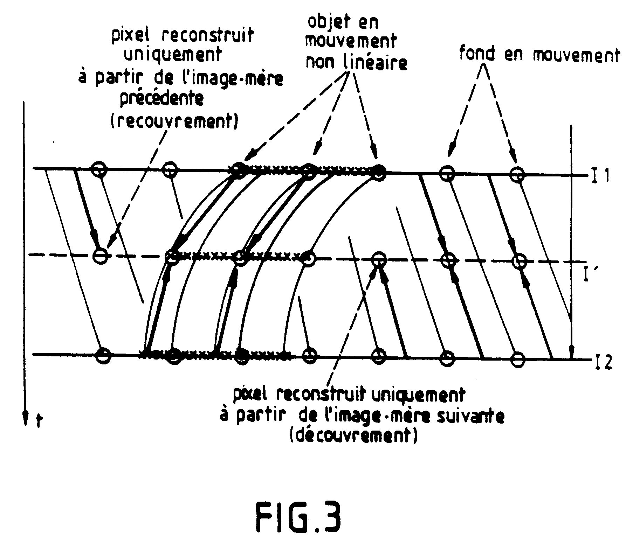

La figure 3 est un schéma illustrant le découvrement (apparition) et le recouvrement (disparition) d'éléments d'objet d'une image "mère" I1 à une image "mère" I2, ainsi que l'effet d'un mouvement non linéaire. Les petits cercles schématisent les pixels, et un objet présent dans l'image a été schématisé par des croix. Cet objet est en mouvement non linéaire puisque sa position dans l'image intermédiaire n'est pas le résultat d'une translation ayant son origine et son extrémité dans des pixels correspondants des deux images mères I1 et I2. Par contre, le fond en mouvement se retrouve dans les deux images mères par une translation. De plus, pour les pixels aux limites de l'objet, l'un est recouvert dans l'image I2 , et l'autre est découvert entre I1 et I2. Le modèle donné par le champ de mouvement entre I1 et I2 n'est donc pas correct.

Pour pouvoir utiliser une méthode de remplacement lorsque nécessaire, la première étape du procédé selon l'invention consiste donc à détecter les défauts de l'estimation de mouvement :

Dans la méthode d'estimation de mouvement décrite dans la demande de brevet n° 88 12468 déjà mentionnée ci-dessus et correspondant au document EP-A-0 360 698 publié le 28/03/90, un critère d'erreur pour l'estimation du mouvement utilise une grandeur appelée différence inter-images compensée en mouvement, DFD, calculée de la manière suivante :

Pour le point courant P(Z,t'),

$$DFD(P) = L(B,t) - L(A,t - T1)$$

où L(B,t) est la luminance du point B dans l'image I2 à l'instant t et L(A,t-T1) est la luminance du point A dans l'image précédente I1, à l'instant t-T1.

En principe si les points A et B sont bien des points homologues dans les images mères I1 et I2, la différence temporelle compensée, c'est-à-dire tenant compte du mouvement, DFD est inférieure à un seuil.

En conséquence pour tous les points P de la trame à interpoler tels que les différences de luminance temporelles inter-images compensées en mouvement sont supérieures à un seuil s, le vecteur de mouvement associé est déclaré défectueux et le point correspondant est marqué dans une matrice de cohérence. Dans le cas contraire, le vecteur de mouvement est déclaré juste et le point correspondant de la matrice n'est pas marqué.

Cette étape de détection des défauts dans l'estimation de mouvement peut être complétée par un test sur la différence de luminance entre points de mêmes coordonnées que le point courant de l'image à interpoler dans les images mères. Cette information est caractéristique du degré de ressemblance entre les points de mêmes coordonnées dans les images mères et permet de savoir si une interpolation linéaire simple, ne tenant pas compte du mouvement, est une solution de repli opportune pour ces "points défectueux".

Une autre méthode d'analyse, basée sur la cohérence du champ de mouvement, conduit à la détection de points défectueux. En effet, les défauts du champ de mouvement sont dus soit à l'imprécision de l'algorithme d'estimation, soit à l'inadéquation du mouvement en tant que modèle de changement temporel. Ceci se traduit généralement par un champ de vecteurs mouvement localement désordonné, avec de fortes ruptures correspondant à une divergence de l'estimateur. Plusieurs opérateurs locaux peuvent être exploités pour la détection des défauts, utilisant un histogramme local ou une variance ; ils nécessitent l'observation d'un bloc de vecteurs :

- un histogramme local peut être créé pour un bloc de points, de dimensions 5x5 par exemple, par dénombrement des vecteurs mouvement différents à l'intérieur du bloc ; le nombre n résultant est alors comparé à un seuil $s_1$, et si n est supérieur à $s_1$, le point central du bloc (ou le bloc) est marqué, car défectueux ;
- une méthode un peu plus élaborée consiste à partir de l'histogramme des vecteurs différents d'un bloc de points, à calculer la probabilité $p_i$ des différents vecteurs de mouvement $\overline{Di}$, puis l'entropie E qui informe sur le "désordre" à l'intérieur du bloc : $E = -\Sigma pi.\ln(pi)$. Cette entropie est alors comparée à un seuil $s_2$ et si E est supérieure à $s_2$, le point (ou le bloc) est marqué ;
- une analyse de cohérence par calcul de variance peut également être effectuée, en calculant la grandeur : $V = \Sigma |(Dxi-mx)^2 + (Dyi-my)^2|$ avec $mx = (\Sigma Dxi)/N$ et $my = (\Sigma Dyi)/N$, mx et my étant les moyennes des composantes des vecteurs mouvement et N le nombre de points du bloc. Il est aussi possible de simplifier en calculant une pseudo-variance pour laquelle la moyenne est remplacée par les composantes du vecteur mouvement du pixel central du bloc, Do :

$$PV = \Sigma(Di - Do)^2$$

La variance, ou la pseudo-variance, est alors comparée à un seuil s₃, et le point central (ou le bloc), est marqué défectueux lorsque V (ou PV) est supérieur à s₃.

Toutes les méthodes d'analyse de cohérence du champ de mouvement décrites ci-dessus nécessitent le calcul du critère sur un bloc de points. Cependant comme indiqué ci-dessus, la décision peut concerner le point courant, point central du bloc analysé, la fenêtre étant alors glissante, ou concerner tout le bloc de points sur lequel a été calculé le critère, les blocs sont alors adjacents, la méthode étant ainsi beaucoup moins coûteuse en temps de calcul.

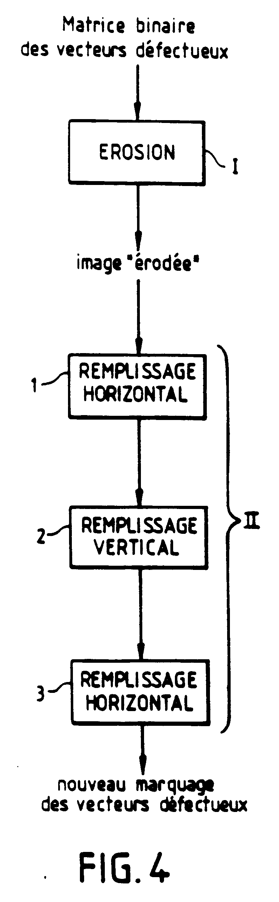

Dans tous les cas, l'information résultante "points défectueux" est fortement bruitée et une étape de filtrage est alors nécessaire afin de mieux définir les points à mouvement défectueux. Ce filtrage de l'information d'incohérence du champ de mouvement est effectué en 2 étapes décrites ci-après en référence à la figure 4.

A partir de la matrice binaire caractérisant les vecteurs défectueux obtenue par le critère de cohérence du champ de mouvement, une première phase I de filtrage de l'information d'incohérence, appelée érosion, est effectuée : pour chaque point courant marqué comme défectueux, si le nombre de points non marqués dans un bloc centré sur ce point courant est supérieur à un seuil fixe S, alors le point marqué comme défectueux dans l'étape précédente perd son marquage dans la matrice binaire caractérisant les vecteurs défectueux après érosion. Cette étape a pour but de supprimer les petites zones considérées comme non significatives.

La deuxième phase II du filtrage est une phase dite de remplissage et comporte une première étape 1 de remplissage dit horizontal, une seconde étape 2 dite de remplissage vertical, et une troisième étape 3 dans laquelle est effectué à nouveau un remplissage dit horizontal. Ce filtrage aboutit à un nouveau marquage des vecteurs défectueux.

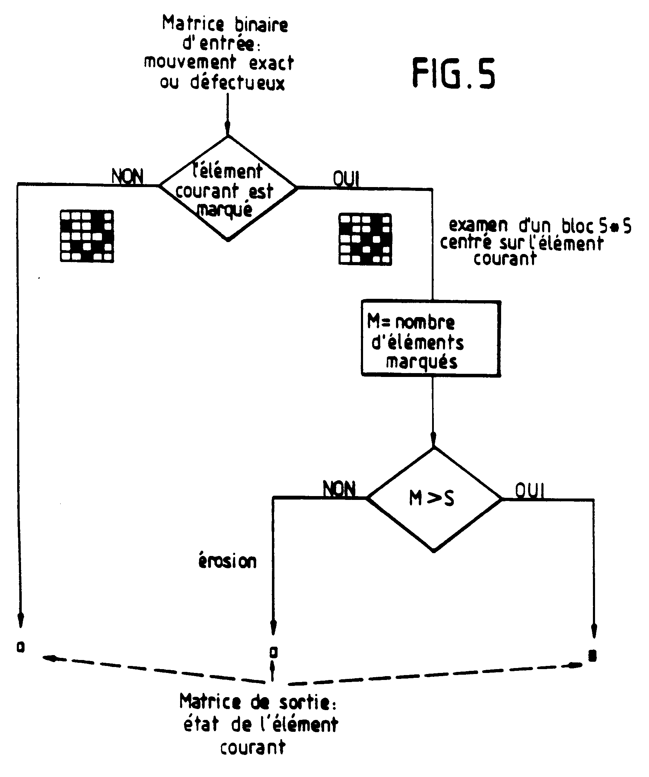

La figure 5 illustre plus en détails la phase d'érosion du filtrage de l'information de la cohérence. Sur cette figure, le marquage des points ou blocs défectueux est symbolisé par un noircissement des cases correspondantes d'une matrice.

Si l'information point défectueux est le résultat d'un marquage par bloc, le traitement s'appliquera aux blocs adjacents de l'image, un élément de la matrice correspondant à un bloc de pixels, réduisant ainsi le nombre de traitements. La matrice binaire d'entrée indiquant les points ou les blocs marqués comme exacts et les points ou les blocs marqués comme défectueux est testée par un procédé d'analyse classique, ligne par ligne. Le premier test consiste à examiner si l'élément courant de la matrice (point ou bloc) est marqué. S'il ne l'est pas, il est transmis tel quel à la sortie du dispositif d'érosion. S'il est marqué par contre, le nombre d'éléments marqués dans un bloc 5x5 de la matrice centré sur l'élément courant analysé est calculé. Ce nombre d'éléments marqués M est alors à comparer au seuil S. Si M est supérieur à S l'élément initialement marqué comme défectueux est conservé dans le même état. Si par contre le nombre M d'éléments marqués qui l'entourent est inférieur au seuil S une érosion est décidée, c'est-à-dire que l'élément initialement marqué est remis dans l'état qui caractérise un élément de vecteur mouvement exact.

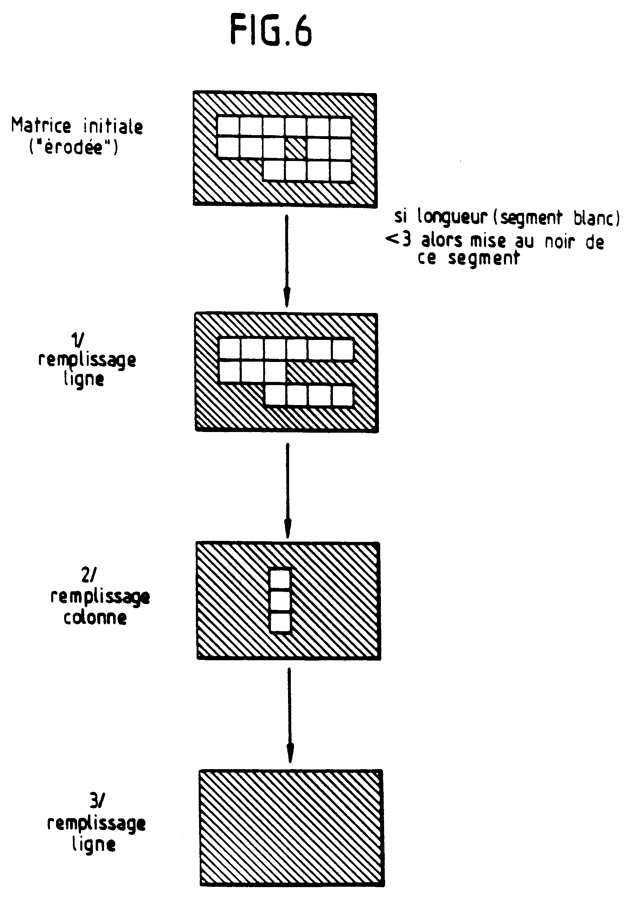

La figure 6 illustre l'effet de la phase de remplissage à partir d'une matrice initiale érodée telle qu'elle résulte de la phase précédente, c'est-à-dire dans laquelle les éléments isolés ont été supprimés. Une longueur de segment prédéterminée minimale est choisie, par exemple à 3 dans cet exemple : si la longueur d'un segment d'éléments non marqués entre deux éléments marqués est inférieure à 3, alors l'ensemble du segment est marqué. La première phase de remplissage ligne a pour effet dans l'exemple représenté d'ajouter deux éléments marqués. La phase suivante de remplissage colonne a pour effet de marquer tous les éléments non marqués appartenant à des segments verticaux de longueurs 1 ou 2 ; seul subsiste un segment vertical de longueur égale à 3. La phase suivante de remplissage ligne conduit à supprimer également ces points marqués le résultat étant que l'ensemble de la zone analysée représentée sur la figure 6 est considéré comme défectueux quant à l'analyse du champ de vecteur mouvement.

Cette phase étant terminée, si ce traitement a été effectué sur des blocs de points, la dimension image est reprise c'est-à-dire que l'état du bloc correspondant est affecté à tous les points correspondants de l'image, et c'est cette information de cohérence du champ de vecteurs mouvement, résultant du filtrage, qui va être exploitée pour la mise en oeuvre de la solution de repli lorsque nécessaire.

En ce qui concerne la solution de repli elle-même, elle n'a pas pour objectif d'interpoler fidèlement les zones détectées défectueuses au sens de l'analyse du mouvement, mais de produire une information de luminance qui masque au mieux les défauts d'interpolation. En particulier, les défauts de la compensation de mouvement sont dus, comme indiqué ci-dessus, d'une part à l'inhomogénéïté locale spatiale du mouvement qui déforme les structures dans l'image, et d'autre part à l'inhomogénéïté locale temporelle qui modifie ces déformations au cours du temps, ce qui crée des défauts visibles importants. L'objectif essentiel de cette solution de repli est donc l'homogénéïsation du champ de mouvement dans les zones à mouvements défectueux.

Plusieurs solutions sont possibles ; la première solution intéressante est une simple interpolation linéaire : cette interpolation peut être assimilée en fait à une interpolation compensée en mouvement avec un vecteur mouvement de composantes nulles dans le plan XY, mais au lieu d'utiliser simplement deux images mères comme dans l'interpolation compensée en mouvement, l'interpolation linéaire peut être réalisée à partir d'un nombre supérieur d'images mères, par exemple 4 ou 6. Dans les zones à mouvement défectueux, la valeur de luminance résultant de l'interpolation à compensation de mouvement peut alors être remplacée par la valeur de luminance résultant de l'interpolation linéaire.

Cette interpolation linéaire est préférentiellement calculée pour tous les points, en parallèle avec l'interpolation à compensation de mouvement de façon qu'une commutation dite "douce" puisse être effectuée, au lieu d'une commutation abrupte, entre la voie à compensation de mouvement et la voie linéaire, une telle commutation abrupte étant susceptible de créer des ruptures visibles et gênantes. En conséquence la commutation peut être effectuée de la manière suivante : à partir de la matrice binaire de cohérence du champ de mouvement, les pixels non marqués sont mis à zéro. Les pixels marqués sont quant à eux mis à une valeur non nulle V. Cette matrice à deux valeurs de l'information de cohérence du champ de mouvement est ensuite filtrée par un filtre passe-bas et les valeurs résultantes $a$ comprises entre O et V des pixels de la nouvelle matrice (non binaire) permettent de définir un coefficient de mélange i des deux voies d'interpolation. Si la luminance interpolée d'un pixel obtenu par interpolation linéaire est IntL et si la luminance du pixel obtenu par interpolation à compensation de mouvement est IntCM, la luminance du pixel de l'image interpolée est alors égale à :

$$Int = i.IntL + (1 - i).IntCM,$$

avec i = a/V, a étant la valeur du pixel dans la matrice des informations de cohérence filtrée passe-bas ; i est compris entre 0 et 1 comme indiqué ci-dessus, ce mélange permet d'adoucir les ruptures entre interpolation compensée en mouvement et solution de repli.

Une autre solution de repli est possible, basée sur le fait qu'une seule des composantes du vecteur mouvement peut être fausse. En conséquence, au lieu d'analyser la cohérence du vecteur mouvement dans son ensemble, la détection d'incohérence est appliquée aux composantes horizontales et verticales prises séparément. Dans cette solution, la détection des défauts du champ de vecteurs mouvement est appliquée séparément sur les composantes horizontales et sur les composantes verticales ; de même les étapes d'érosion et de filtrage sont appliquées aux matrices de défauts ainsi obtenues. La phase suivante est alors une simple mise à zéro de la composante considérée comme défectueuse, pour un pixel donné, à l'issue de la phase d'érosion et de remplissage.

Comme dans la solution précédente il est nécessaire de masquer les ruptures entre interpolation à mouvement compensée et solution de repli. Ce masquage est obtenu par filtrage moyenneur du champ de mouvement, par composantes. La moyenne peut être calculée par exemple dans des blocs de dimensions 7x7.

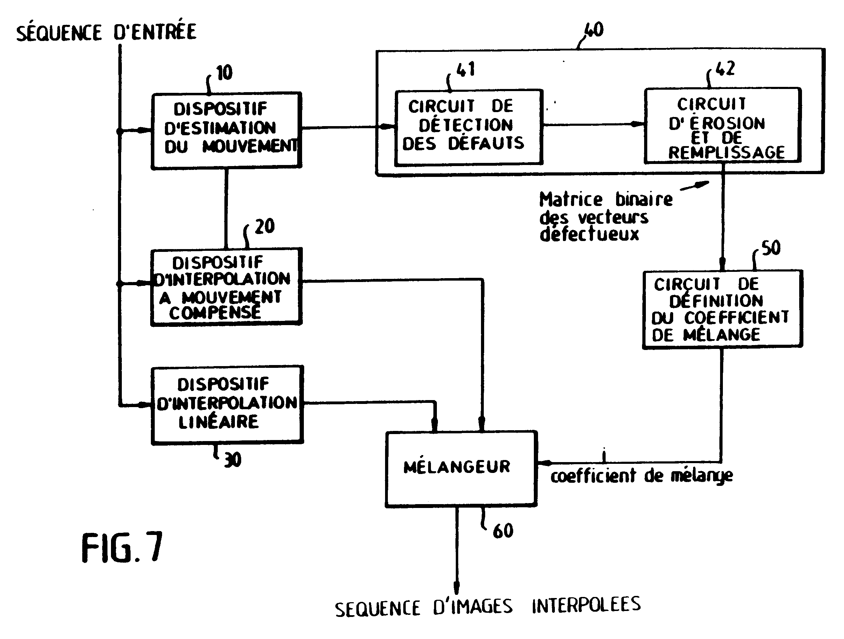

Le schéma synoptique du dispositif d'interpolation à compensation de mouvement avec solution de repli selon la première méthode est représenté sur la figure 7 : la séquence d'images d'entrée est appliquée simultanément à un dispositif d'estimation de mouvement 10, à un dispositif d'interpolation à mouvement compensé, 20, et à un dispositif d'interpolation linéaire 30. Le dispositif d'interpolation à mouvement compensé traite la séquence d'entrée à partir d'informations reçues du dispositif d'estimation de mouvement 10. Une sortie du dispositif d'estimation de mouvement qui fournit le champ de vecteurs mouvement est reliée à un circuit d'analyse de cohérence du champ de vecteurs mouvement 40 qui comporte un circuit de détection des défauts 41 dont la sortie est reliée à un circuit de filtrage 42 qui réalise le traitement décrit ci-dessus, érosion puis remplissage. A la sortie de ce circuit une matrice binaire de cohérence, dans laquelle sont marqués les vecteurs mouvement défectueux est donc disponible. Cette matrice binaire est appliquée à un circuit 50 de définition des coefficients de mélange i à appliquer à un mélangeur 60 recevant les informations issues du dispositif d'interpolation à mouvement compensé 20 et celles reçues du dispositif d'interpolation linéaire 30.Le mélangeur 60 délivre la séquence d'images interpolées dans laquelle les défauts dus à l'imperfection du modèle utilisé pour l'interpolation à compensation de mouvement, sont masqués.

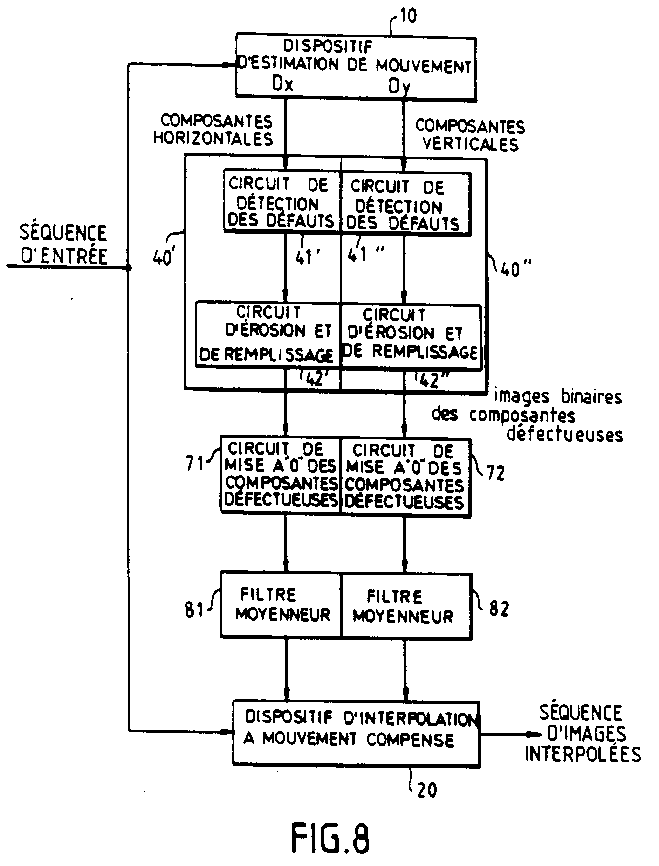

La figure 8 est un schéma synoptique du dispositif d'interpolation à compensation de mouvement avec solution de repli selon la deuxième méthode. Dans ce cas la séquence d'images d'entrée est appliquée comme précédemment à un dispositif d'estimation de mouvement 10, les composantes respectivement verticales et horizontales des vecteurs mouvement étant respectivement appliquées à des circuits d'analyse de cohérence 40′ et 40″ comportant chacun un circuit de détection de défauts, respectivement 41′ et 41″ dont les sorties fournissent des matrices binaires caractéristiques de points ou de blocs à vecteurs de mouvement "défectueux" et sont reliées à des circuits de filtrage, respectivement 42′ et 42″ qui effectuent les phases d'érosion et de remplissage décrites ci-dessus pour chacune des deux matrices binaires de vecteurs défectueux associées aux composantes respectivement horizontale et verticale. Les matrices binaires résultantes, après filtrage, sont transmises à des circuits 71 et 72 qui mettent à zéro les composantes défectueuses. Ces circuits ont leurs sorties reliées aux entrées de filtres moyenneurs, respectivement 81 et 82, qui fournissent les composantes du vecteur mouvement directement traitées pour éviter les transitions abruptes. Ce sont ces composantes traitées qui sont appliquées au dispositif d'interpolation à mouvement compensé 20 recevant par ailleurs la séquence d'images d'entrée, et qui fournit la séquence d'images interpolées.

L'invention n'est pas limitée aux modes de réalisation précisément décrits ci-dessus, notamment en ce qui concerne les modes d'interpolation destinés à remplacer l'interpolation à compensation de mouvement lorsque le vecteur de mouvement est détecté défectueux.

## Revendications

1. Procédé d'interpolation temporelle d'images, à compensation de mouvement corrigée, comportant une phase d'estimation du champ de vecteurs de mouvement d'une image à interpoler à partir d'images mères l'encadrant, les caractéristiques du point courant étant déterminées à partir des caractéristiques des points associés des images mères déterminés par le vecteur mouvement affecté à ce point courant, une phase d'analyse de cohérence du champ de vecteurs mouvement de l'image à interpoler, l'interpolation à compensation de mouvement étant corrigée pour les points de l'image à interpoler pour lesquels des incohérences ont été détectées dans le champ de vecteurs mouvement, caractérisé en ce que, en parallèle avec l'interpolation à compensation de mouvement du point courant de l'image à interpoler à partir du vecteur mouvement associé à ce point, une interpolation linéaire entre points de mêmes coordonnées que le point courant dans les images mères est calculée, les caractéristiques du point courant de l'image à interpoler étant déterminées à partir des caractéristiques résultant de ces deux interpolations en fonction des défauts détectés dans le champ de vecteurs mouvement.

2. Procédé selon la revendication 1, caractérisé en ce que la phase d'analyse de cohérence du champ de vecteurs mouvement de l'image à interpoler comporte une phase de détection des défauts du champ de vecteurs mouvement d'où résulte une matrice de cohérence binaire au format de l'image caractérisant respectivement un vecteur mouvement exact ou défectueux pour chaque point.

3. Procédé selon la revendication 2, caractérisé en ce que la détection des défauts du champ de vecteurs mouvement est obtenue par comparaison, par rapport à un seuil, de la différence des luminances des points des images mères associés au point courant, ce point étant marqué comme défectueux dans la matrice de cohérence lorsque cette différence est supérieure au seuil.

4. Procédé selon la revendication 2, caractérisé en ce que la détection des défauts du champ de vecteurs mouvement est obtenue par comparaison d'un seuil avec le résultat d'un opérateur local, du type variance ou utilisant un histogramme des vecteurs mouvement dans des blocs de points, le vecteur mouvement étant marqué comme défectueux lorsque le résultat de l'opérateur est supérieur au seuil.

5. Procédé selon la revendication 4, caractérisé en ce que la détection des défauts des vecteurs mouvements est effectuée pour chaque point de l'image, par bloc glissant avec le point courant.

6. Procédé selon la revendication 4, caractérisé en ce que la détection des défauts des vecteurs mouvements est effectuée par blocs adjacents, tous les points d'un bloc analysé étant marqués comme défectueux lorsque le champ de mouvement du bloc est considéré comme incohérent.

7. Procédé selon l'une des revendications 2 à 6, caractérisé en ce que la phase de détection des défauts du champ de vecteurs mouvement est suivie d'une phase de filtrage qui dans une étape dite d'érosion supprime le marquage des points ou blocs défectueux isolés et qui dans une étape dite de remplissage marque comme défectueux les points ou blocs reconnus exacts dans la phase de détection de défauts mais qui sont isolés dans des zones plus larges marquées comme défectueuses.

8. Procédé selon la revendication 1, caractérisé en ce que la luminance du point courant de l'image à interpoler est la valeur obtenue par interpolation temporelle à compensation de mouvement pour les points de l'image dont les vecteurs de mouvement ont été reconnus exacts, et est la valeur obtenue par interpolation linéaire pour les points marqués comme ayant des vecteurs mouvement défectueux.

9. Procédé selon la revendication 2, caractérisé
   - en ce qu'il comporte en outre une phase de filtrage de la matrice de cohérence donnant des états intermédiafres aux points des voisinages des transitions entre zones correspondant à des vecteurs mouvement déclarés exacts et zones marquées correspondant à des vecteurs mouvement déclarés défectueux,
   - et en ce que la luminance du point courant de l'image à interpoler, Int, est le résultat d'une combinaison entre la luminance obtenue par interpolation à compensation de mouvement, IntCM, et la luminance obtenue par interpolation linéaire IntL, telle que :
Int = i.IntL + (1-i) IntCM, où i, coefficient de mélange compris entre 0 et 1, est fonction de l'état du point correspondant dans la matrice de cohérence filtrée.

10. Procédé selon la revendication 1, caractérisé en ce que l'analyse de cohérence du champ de vecteurs mouvement est effectuée par des analyses séparées en parallèle des composantes verticales et horizontales de ces vecteurs, la luminance du point courant de l'image à interpoler étant obtenue par interpolation à compensation de mouvement corrigée par
    - l'annulation des composantes du vecteur mouvement lorsqu'elles ont été détectées défectueuses,
    - puis le filtrage spatial des composantes séparées.

11. Dispositif pour la mise en oeuvre du procédé selon l'une quelconque des revendications 1 à 10, caractérisé en ce qu'il comporte
    - un dispositif d'estimation de mouvement (10) recevant une séquence d'images d'entrée et fournissant un champ de vecteurs de mouvement pour chaque image intermédiaire à interpoler entre deux images mères de la séquence d'entrée ;
    - un dispositif d'interpolation à mouvement compensé (20) recevant d'une part la séquence d'images d'entrée, d'autre part le champ de vecteurs de mouvement des images à interpoler ;
    - un dispositif d'interpolation linéaire (30) recevant également la séquence d'images d'entrée ;
    - un circuit d'analyse de cohérence du champ de vecteurs-mouvement (40) dont l'entrée est reliée à la sortie du dispositif d'estimation de mouvement et dont la sortie est reliée à l'entrée d'un circuit de sortie (50, 60) connecté aussi au dispositif d'interpolation à mouvement compensé et au dispositif d'interpolation linéaire, le circuit de sortie fournissant pour chaque point d'image une valeur de luminance déduite des valeurs de luminance interpolées par les dispositifs d'interpolation à compensation de mouvement (20) et d'interpolation linéaire (30).

12. Dispositif selon la revendication 11, caractérisé en ce que le circuit de sortie est constitué par un mélangeur (60) recevant les coefficients d'un circuit de définition du coefficient de mélange (50) connecté en sortie au circuit de cohérence (40).

13. Dispositif selon l'une quelconque des revendications 11 et 12, caractérisé en ce que le circuit d'analyse de cohérence (40) comporte un circuit de détection des défauts du champ de vecteurs de mouvement (41) suivi d'un circuit de filtrage (42) qui par érosion et remplissage réduit les zones isolées marquées comme défectueuses ou au contraire non marquées dans la matrice de cohérence générée.

**Patentansprüche**

1. Verfahren zum zeitlichen Interpolieren von Bildern mit korrigierter Bewegungskompensation, mit einer Phase des Schätzens des Bewegungsvektorfeldes eines zu interpolierenden Bildes ausgehend von es umgebenden Mutterbildern, wobei die Eigenschaften des momentanen Punkts ausgehend von den Eigenschaften der zugeordneten Punkte der Mutterbilder bestimmt werden, die ihrerseits durch den diesem momentanen Punkt zugewiesenen Bewegungsvektor bestimmt sind, einer Phase der Analyse der Kohärenz des Bewegungsvektorfeldes des zu interpolierenden Bildes, wobei die Interpolation mit Bewegungskompensation für diejenigen Punkte des zu interpolierenden Bildes korrigiert wird, für die Inkohärenzen im Bewegungsvektorfeld erfaßt worden sind, dadurch gekennzeichnet, daß parallel zu der Interpolation mit Bewegungskompensation des momentanen Punkts des zu interpolierenden Bildes ausgehend von dem diesem Punkt zugeordneten Bewegungsvektor eine lineare Interpolation zwischen Punkten mit denselben Koordinaten wie der momentane Punkt in den Mutterbildern berechnet wird, wobei die Eigenschaften des momentanen Punkts des zu interpolierenden Bildes ausgehend von den Eigenschaften bestimmt werden, die sich aus diesen beiden Interpolationen in Abhängigkeit von den im Bewegungsvektorfeld erfaßten Fehlern ergeben.

2. Verfahren nach Anspruch 1, dadurch gekennzeichnet, daß die Phase der Analyse der Kohärenz des Bewegungsvektorfeldes des zu interpolierenden Bildes eine Phase der Erfassung von Fehlern des Bewegungsvektorfeldes enthält, aus der sich eine binäre Kohärenzmatrix mit dem Format des Bildes ergibt, die für jeden Punkt einen fehlerfreien bzw. fehlerhaften Bewegungsvektor kennzeichnet.

3. Verfahren nach Anspruch 2, dadurch gekennzeichnet, daß die Erfassung der Fehler des Bewegungsvektorfeldes durch Vergleich der Luminanzdifferenz der der dem momentanen Punkt zugeordneten Punkte der Mutterbilder mit einem Schwellenwert erhalten wird, wobei dieser Punkt in der Kohärenzmatrix als fehlerhaft gekennzeichnet wird, wenn diese Differenz größer als der Schwellenwert ist.

4. Verfahren nach Anspruch 2, dadurch gekennzeichnet, daß die Erfassung der Fehler des Bewegungsvektorfeldes durch Vergleich eines Schwellenwertes mit dem Resultat eines lokalen Operators, der entweder vom Varianztyp ist oder ein Histogramm der Bewegungsvektoren in den Punktblöcken verwendet, erhalten wird, wobei der Bewegungsvektor als fehlerhaft gekennzeichnet wird, wenn das Resultat des Operators größer als der Schwellenwert ist.

5. Verfahren nach Anspruch 4, dadurch gekennzeichnet, daß die Erfassung der Fehler der Bewegungsvektoren für jeden Bildpunkt pro Block, welcher sich mit dem momentanen Punkt verschiebt, ausgeführt wird.

6. Verfahren nach Anspruch 4, dadurch gekennzeichnet, daß die Erfassung der Fehler der Bewegungsvektoren für benachbarte Blöcke ausgeführt wird, wobei alle Punkte eines analysierten Blocks als fehlerhaft gekennzeichnet werden, wenn das Bewegungsfeld des Blocks als inkohärent angesehen wird.

7. Verfahren nach einem der Ansprüche 2 bis 6, dadurch gekennzeichnet, daß der Phase der Erfassung der Fehler des Bewegungsvektorfeldes eine Phase der Filterung folgt, die in einer sogenannten Abtragungsstufe die Kennzeichnung der abgesonderten fehlerhaften Punkte oder Blöcke beseitigt und die in einer sogenannten Auffüllstufe diejenigen Punkte oder Blöcke als fehlerhaft kennzeichnet, die in der Phase der Erfassung der Fehler als fehlerfrei erkannt worden sind, die jedoch in größeren Zonen, die als fehlerhaft gekennzeichnet sind, abgesondert sind.

8. Verfahren nach Anspruch 1, dadurch gekennzeichnet, daß die Luminanz des momentanen Punkts des zu interpolierenden Bildes für diejenigen Punkte des Bildes, deren Bewegungsvektoren als fehlerfrei erkannt worden sind, der Wert ist, der durch zeitliche Interpolation mit Bewegungskompensation erhalten wird, und für diejenigen Punkte, die als fehlerhafte Bewegungsvektoren besitzend gekennzeichnet sind, der Wert ist, der durch lineare Interpolation erhalten wird.

9. Verfahren nach Anspruch 2, dadurch gekennzeichnet,
   - daß es außerdem eine Phase der Filterung der Kohärenzmatrix enthält, die den Punkten in der Umgebung der Übergänge zwischen Zonen, die als fehlerfrei erklärten Bewegungsvektoren entsprechen, und gekennzeichneten Zonen, die als fehlerhaft erklärten Bewegungsvektoren entsprechen, Zwischenzustände verleiht,
   - und daß die Luminanz des momentanen Punkts des zu interpolierenden Bildes, Int, das Ergebnis einer Kombination zwischen der Luminanz, die durch Interpolation mit Bewegungskompensation, IntCM, erhalten wird, und der Luminanz, die durch lineare Interpolation, IntL, erhalten wird, ist, derart, daß: Int = i · IntL + (1-i) IntCM, wobei i, der im Bereich von 0 bis 1 liegende Mischungskoeffizient, vom Zustand des entsprechenden Punkts in der gefilterten Kohärenzmatrix abhängt.

10. Verfahren nach Anspruch 1, dadurch gekennzeichnet, daß die Analyse der Kohärenz des Bewegungsvektorfeldes durch getrennte parallele Analysen der vertikalen und der horizontalen Komponenten dieser Vektoren ausgeführt wird, wobei die Luminanz des momentanen Punkts des zu interpolierenden Bildes durch Interpolation mit korrigierter Bewegungskompensation erhalten wird durch
   - die Annullierung der Komponenten des Bewegungsvektors, wenn sie als fehlerhaft erfaßt worden sind,
   - dann die räumliche Filterung der getrennten Komponenten.

11. Vorrichtung zum Ausführen des Verfahrens nach irgendeinem der Ansprüche 1 bis 10, dadurch gekennzeichnet, daß sie enthält
   - eine Einrichtung zum Schätzen der Bewegung (10), die eine Folge von Eingangsbildern empfängt und für jedes zu interpolierende Zwischenbild zwischen zwei Mutterbildern der Eingangsfolge ein Bewegungsvektorfeld liefert;
   - eine Einrichtung zur Interpolation mit kompensierter Bewegung (20), die einerseits die Folge von Eingangsbildern und andererseits das Bewegungsvektorfeld der zu interpolierenden Bilder empfängt;
   - eine Einrichtung für lineare Interpolation (30), die ebenfalls die Folge von Eingangsbildern empfängt;
   - eine Schaltung für die Analyse der Kohärenz des Bewegungsvektorfeldes (40), deren Eingang mit dem Ausgang der Bewegungsschätzeinrichtung verbunden ist und deren Ausgang mit dem Eingang einer Ausgangsschaltung (50, 60) verbunden ist, die ebenfalls an die Einrichtung für die Interpolation mit kompensierter Bewegung und an die Einrichtung für lineare Interpolation angeschlossen ist, wobei die Ausgangsschaltung für jeden Bildpunkt einen Luminanzwert liefert, der aus den Luminanzwerten abgeleitet ist, die durch die Einrichtung für Interpolation mit Bewegungskompensation (20) und durch die Einrichtung für lineare Interpolation (30) interpoliert werden.

12. Vorrichtung nach Anspruch 11, dadurch gekennzeichnet, daß die Ausgangsschaltung durch einen Mischer (60) gebildet ist, der die Koeffizienten von einer Schaltung für die Definition des Mischungskoeffizienten (50) empfängt, die ihrerseits an den Ausgang der Kohärenzschaltung (40) angeschlossen ist.

13. Vorrichtung nach irgendeinem der Ansprüche 11 und 12, dadurch gekennzeichnet, daß die Schaltung für die Analyse der Kohärenz (40) eine Schaltung für die Erfassung der Fehler des Bewegungsvektorfeldes (41) enthält, gefolgt von einer Filterungsschaltung (42), die durch Abtragen und Auffüllen die abgesonderten Zonen, die als fehlerhaft gekennzeichnet sind, oder aber die nicht gekennzeichneten Zonen in der erzeugten Kohärenzmatrix reduziert.

## Claims

1. Process for temporal image interpolation, with corrected compensation of motion, including a phase of estimating the field of motion vectors of an image to be interpolated from mother images flanking it, the characteristics of the current point being determined from the characteristics of the points associated with the mother images and determined by the motion vector assigned to this current point, a phase of consistency analysis of the motion vector field of the image to be interpolated, the interpolation with motion compensation being corrected for those points of the image to be interpolated for which inconsistencies were detected in the motion vector field, characterized in that, in parallel with the interpolation with motion compensation of the current point of the image to be interpolated from the motion vector associated with this point, a linear interpolation between points with the same coordinates as the current point in the mother images is calculated, the characteristics of the current point of the image to be interpolated being determined from the characteristics resulting from these two interpolations as a function of the defects detected in the motion vector field.

2. Process according to Claim 1, characterized in that the phase of consistency analysis of the motion vector field of the image to be interpolated includes a phase of detection of the defects in the motion vector field which results in an image-format binary consistency matrix characterizing a correct or defective motion vector respectively for each point.

3. Process according to Claim 2, characterized in that detection of the defects in the motion vector field is achieved by comparing, relative to a threshold, the difference of the luminances of those points of the mother images associated with the current point, this point being tagged as defective in the consistency matrix when this difference is greater than the threshold.

4. Process according to Claim 2, characterized in that detection of the defects in the motion vector field is achieved by comparing a threshold with the result of a local operator, of the variance type or one using a histogram of the motion vectors within blocks of points, the motion vector being tagged as defective when the result of the operator is greater than the threshold.

5. Process according to Claim 4, characterized in that detection of the defects in the motion vectors is performed for each point of the image, per sliding block together with the current point.

6. Process according to Claim 4, characterized in that detection of the defects in the motion vectors is performed for adjacent blocks, all the points of an analyzed block being tagged as defective when the field of motion of the block is regarded as inconsistent.

7. Process according to one of Claims 2 to 6, characterized in that the phase of detecting the defects in the motion vector field is followed by a filtering phase which in a so-called erosion step deletes the tagging of the isolated defective points or blocks and which in a so-called infill step tags as defective the points or blocks acknowledged as correct in the defect detection phase but which are isolated within wider zones tagged as defective.

8. Process according to Claim 1, characterized in that the luminance of the current point of the image to be interpolated is the value obtained through temporal interpolation with motion compensation for the points of the image whose motion vectors were acknowledged to be correct, and is the value obtained through linear interpolation for the points tagged as having defective motion vectors.

9. Process according to Claim 2, characterized
   - in that it furthermore includes a phase of filtering the consistency matrix giving intermediate states to the points of the neighbourhoods of the transitions between zones corresponding to motion vectors declared correct and tagged zones corresponding to motion vectors declared defective,
   - and in that the luminance of the current point of the image to be interpolated, Int, is the result of combining the luminance obtained by interpolation with motion compensation, IntCM, and the luminance obtained through linear interpolation IntL, such that:
   Int = i.IntL + (1-i) IntCM, where i, the mixing coefficient lying between 0 and 1, depends on the state of the corresponding point in the filtered consistency matrix.

10. Process according to Claim 1, characterized in that the consistency analysis of the motion vector field is performed by separate analyses in parallel of the vertical and horizontal components of these vectors, the luminance of the current point of the image to be interpolated being obtained by interpolation with motion compensation corrected by
    - cancellation of the components of the motion vector when they have been detected as defective,
    - and then spatial filtering of the separate components.

11. Device for implementing the process according to any one of Claims 1 to 10, characterized in that it includes
    - a motion estimation device (10) receiving an input image sequence and providing a motion vector field for each intermediate image to be interpolated between two mother images of the input sequence;
    - a compensated-motion interpolation device (20) receiving on the one hand the input image sequence, and on the other the field of motion vectors of the images to be interpolated;
    - a linear interpolation device (30) likewise receiving the input image sequence;
    - a motion vector field consistency analysis circuit (40) whose input is connected to the output of the motion estimation device and whose output is connected to the input of an output circuit (50, 60) also linked to the compensated-motion interpolation device and to the linear interpolation device, the output circuit providing for each image point a luminance value deduced from the luminance values interpolated by the motion-compensation interpolation device (20) and linear interpolation device (30).

12. Device according to Claim 11, characterized in that the output circuit consists of a mixer (60) receiving the coefficients from a mixing coefficient definition circuit (50) connected at the output of the consistency circuit (40).

13. Device according to either one of Claims 11 and 12, characterized in that the consistency analysis circuit (40) includes a motion vector field defect detection circuit (41) followed by a filtering circuit (42) which by erosion and infill reduces the isolated zones which are tagged as defective or on the contrary are untagged in the generated consistency matrix.

FIG.1

SÉQUENCE D'IMAGES
D'ENTRÉE

SÉQUENCE D'IMAGES
DE SORTIE

FIG.2

FIG.3

Matrice binaire
des vecteurs défectueux

EROSION    I

image "érodée"

1   REMPLISSAGE
HORIZONTAL

2   REMPLISSAGE
VERTICAL    II

3   REMPLISSAGE
HORIZONTAL

nouveau marquage
des vecteurs défectueux

FIG. 4

# FIG. 5

Matrice binaire
d'entrée:
mouvement exact
ou défectueux

l'élément
courant est
marqué

NON          OUI

examen d'un bloc 5∗5
centré sur l'élément
courant

M = nombre
d'éléments
marqués

NON        M > S        OUI

érosion

Matrice de sortie:
état de l'élément
courant

# FIG.6

Matrice initiale ("érodée")

si longueur (segment blanc) <3 alors mise au noir de ce segment

1/ remplissage ligne

2/ remplissage colonne

3/ remplissage ligne

SÉQUENCE D'ENTRÉE

40

DISPOSITIF
D'ESTIMATION
DU MOUVEMENT
10

CIRCUIT DE
DÉTECTION
DES DÉFAUTS
41

CIRCUIT
D'ÉROSION
ET DE
REMPLISSAGE
42

Matrice binaire
des vecteurs
défectueux

DISPOSITIF
D'INTERPOLATION
A MOUVEMENT
COMPENSÉ
20

CIRCUIT DE
DÉFINITION
DU COEFFICIENT
DE MÉLANGE
50

DISPOSITIF
D'INTERPOLATION
LINÉAIRE
30

MÉLANGEUR
60

coefficient de mélange

FIG. 7

SÉQUENCE D'IMAGES INTERPOLÉES

EP 0 390 660 B1

17

FIG.8